# EUROPEAN PATENT SPECIFICATION

(11) **EP 2 741 465 B1**
(45) Date of publication and mention of the grant of the patent: **17.03.2021**
(21) Application number: 13195488.5
(22) Date of filing: 03.12.2013
(51) Int. Cl.: H04L 29/06, H04W 12/06, H04W 12/08, H04W 84/20

(54) **Method and device for managing secure communications in dynamic network environments**
Verfahren und Vorrichtung zur Verwaltung der sicheren Kommunikation in dynamischen Netzwerkumgebungen
Procédé et dispositif pour gérer des communications sécurisées dans des environnements de réseau dynamique

(30) Priority: 04.12.2012 EP 12306510
(43) Date of publication of application: 11.06.2014
(73) Proprietor: ORANGE, 75015 Paris (FR)
(72) Inventor: JIANG, Peng, LONDON, NW9 5ZE (GB); VALVERDE, Guillaume, LONDON, NW10 5HJ (GB)

(56) References cited:
- EP-A1- 1 716 675
- WO-A1-02/28138
- WO-A1-2008/118475
- US-A1- 2008 072 292
- PRIGENT, ANDREAUX, BIDAN, HEEN: "Secure Long Term Communities in Ad Hoc Networks", ACM, 2 PENN PLAZA, SUITE 701 - NEW YORK USA, 2003, pages 115-123, XP040179333,

## Description

### Field Of The Invention

The present invention relates to the field of network security. More particularly, the invention relates to a method and device for managing secure communications in networks containing devices having different security capabilities, especially in contexts where the communications devices present in the environment change in a dynamic manner.

### Background Art

Nowadays, many different types of devices have communications capabilities, especially wireless communication capabilities, whether it be for communication via mobile telecommunications networks, via "wi-fi" - that is on an IEEE 802.11x wireless network (x standing in for any of the various possible extensions, e.g. "a", "b", etc.) -, via Bluetooth, or other systems. Thus, besides traditional wireless communications devices such as mobile telephones, many other types of device also have wireless communications capabilities, notably thanks to the possession of a network interface card (NIC). Examples of such devices include, but are not limited to: desktop computers, laptop computers, personal digital assistants, tablets, wireless printers, set-top boxes, smart televisions, wireless headphones, and so on. For convenience, in the present document all such devices (inclusive of mobile telephones) will be referred to as "wireless communications devices" even if communication is not the only, nor the primary, function of the device in question. Further, unless the context demands otherwise, the expression "communications devices" covers wired and wireless communications devices. Moreover the expression "communications network" will be used to designate a network over which communications can take place even if communication is not the only, nor the primary, function of the network in question

Many wireless communications devices are portable and so the number and type of wired and wireless communications devices present at a given location tends to change in a dynamic manner. Moreover, the messages sent by a wireless communications device are susceptible of being received by any compatible device within the transmission range of the sender. Thus, a communications device may often be in a dynamic environment containing other communications devices that can receive its transmissions or send it signals. Furthermore, the received signals may include requests for access to data, functions or services.

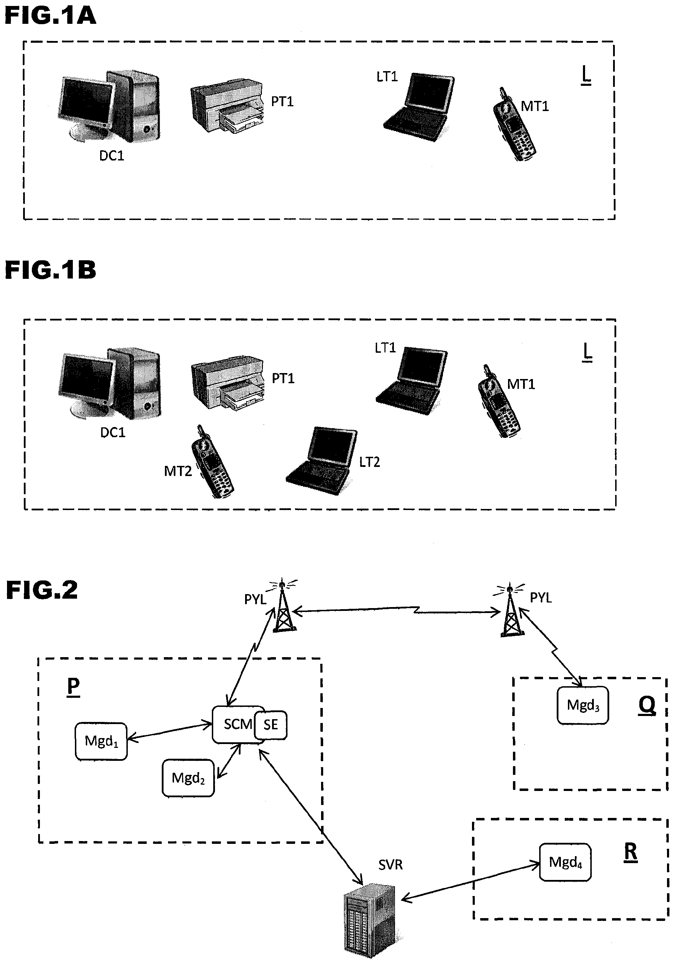

Fig.1 is a diagram which illustrates, schematically, a dynamic environment in which devices having wireless communication capabilities may enter and leave a locality which already contains other devices having communication capabilities.

Fig.1A illustrates a first group of devices that are present at a locality L at a first time, t1. The illustrated group of devices includes a mobile telephone MT1, a wireless printer PT1, a laptop computer LT1, and a desktop computer DC1. In the example illustrated in Fig.1A locality L corresponds to the home of a first user, Alice, and the devices MT1, PT1, LT1 and DC1 all belong to Alice. Devices MT1, PT1 and LT1 all have wireless communication capabilities, but the desktop computer DC1 communicates using a wired Ethernet connection. In this example, Alice's mobile telephone has a SIM (subscriber identification module) which constitutes a secure element that stores paired keys, one being Alice's private key and the other being Alice's public key issued by some certification authority (or self-signed, depending on the application). In this example, none of Alice's devices PT1, LT1 or DC1 possesses a secure element.

Fig.1B illustrates a modified group of devices that are present at locality L at a second time, t2. The modified group of devices includes some extra devices in addition to those shown in Fig.1A. In the example represented by Fig.1B, the additional devices are a second mobile telephone MT2 and a second laptop LT2. Both MT2 and LT2 are wireless communications devices and these additional devices belong to a second user, Bob. In this example, both of Bob's mobile telephone and laptop have respective secure elements which store Bob's private key as well as his public key issued by a certification authority (or self-signed).

It may be that while Bob visits Alice's home he may wish to use one of his wireless communications devices to connect to one of Alice's devices to make that device perform a function or to access data held on that device. For example, Bob may wish to use Alice's printer PT1 to print out a document that is stored on his mobile telephone MT2. In general, Alice will wish to ensure that her communications devices engage in communications with other devices only if these are secure communications, i.e. communications over a secure communications channel. Use of a secure communications channel will ensure protection of data which is sensitive or proprietary to Alice.

In another example, Bob may want to connect to a home gateway at Alice's home to access Internet from this home gateway.

Furthermore, in general Alice will wish to have control over which devices are able to communicate with her communications devices. Thus, Bob devices should not be able to print the document from his mobile telephone MT2 using Alice's printer PT1 or access Internet from his mobile telephone MT2 using Alice's home gateway unless Alice agrees, and it is desirable that communications between Bob's mobile telephone MT2 and Alice's printer PT1 or Bob's mobile telephone MT2 and Alice's home gateway should be secure communications.

Conventionally, different approaches have been employed to ensure that communications engaged in by a communications device are secure.

One approach consists in explicitly configuring the communications network over which the communications device communicates so that all communications are encrypted. An example of this approach may be seen in many domestic wireless LAN (WLAN) set-ups, where all wireless communications transit through an access point and - when the Wired Equivalency Protocol (WEP) is enabled in the network - authorized communications on the network are encrypted using specific WEP settings. The access point will only route messages that are encrypted using the correct WEP settings. A different example of this approach concerns a Bluetooth piconet where peer-to-peer communications take place; the communications are encrypted using keys generated from personal identification number codes (PIN codes) exchanged between pairs of devices.

In order to render communications secure using an encryption-based approach, it is necessary for the communicating devices to have knowledge of the shared key. This requires the key to be pre-deployed, generally via a prior enrolment or registration of the devices that are intended to communicate with each other. Such an approach is relatively inflexible and does not readily enable a third party device to be granted access to a communications device in the group on an ad hoc basis. Moreover, the confidentiality of the shared key is only assured if all of the communicating devices have a secure element for storage of the shared key and a secure channel to ensure the keys distributed securely.

Many electronic devices with communication capabilities possess secure elements (SEs) - i.e. protected chips or other elements, protected storage areas, protected software etc. - which can execute or participate in security algorithms or protocols and store sensitive data securely. Some illustrative examples of secure elements include: smart cards, secure tokens, radio-frequency-enabled cards (RFCs), separate secure memory units, a secure system on a chip, a secure authentication unit stored on the internet, and so on. In modern mobile telephones the SIMs often constitute secure elements. Typically a secure element may hold identification data, credentials (passwords and the like), certificates, public and private keys, and so on. Often a single secure element may store multiple instances of keys, identification data etc., so that the single SE can be used for different applications: for example a ticketing application for a public transportation system, an electronic wallet application, a medical records application, etc. Furthermore, in general, secure elements are capable of implementing cryptographic protocols, as well as providing protection against physical attacks, providing secure content protection and memory management functions.

If all the communications devices in a dynamic environment possess SEs then they can implement mutual authentication procedures in order to determine whether or not to offer services or access to each other in a peer-to-peer configuration, and communication between the devices can be secured, for example using a public key of one of the communicating devices. For example, the public key of a first one of the communicating devices may be used by the other device to encrypt a symmetric session key which the other device wishes to transmit to the first device (in order that future communications between these communicating devices can be encrypted using the session key). The first communication device will use its private key to retrieve the session key so that the secure communications channel can be established. However, in practice in a dynamic environment it is likely that, at least some of the time, the devices present will be heterogeneous in terms of their security capabilities: in other words, some of them may possess SEs and others may not. If one of the communicating devices does not possess a secure element (either embedded or accessible, e.g. in cloud storage) then it will not have a private key or authentication credentials.

The state of the art does not propose a method that enables secure communications to be established between communications devices in an ad hoc manner, in a dynamic network environment which contains devices having heterogeneous security capabilities, without the need for advanced set-up operations.

### Summary of the Invention

The invention is defined by the independent claims. Preferred embodiments are defined by the dependent claims.

Embodiments of the present invention overcome the disadvantages of the state of the art.

Certain embodiments of the present invention provide a secure-communications-management method in which a communications device is configured as a managed device and the managed communications device only accepts commands that update its security policy from an associated manager device. It may be considered that a master-slave relationship exists between the managed communications device and the manager device. The manager device possesses a secure element and the managed device is configured to delegate to the associated manager device the process of authenticating and service authorization of third party devices which seek to communicate with the slave device (e.g. so that the third party device may use services provided by the managed device). Or the slave device wants to access a service provided by the third party device using the credentials stored in the secure element. A secure communication channel between the managed device and the third party device can be set-up using the manager device in a manner which depends on the security capabilities of the third party device. In the absence of support from the manager device a managed device which lacks a secure element cannot ensure secure communication with the third party device. The manager device controls which devices are allowed to communicate with the device(s) it manages.

In particular embodiments of the invention, the managed device is configured not to allow communications with a third party device unless prior permission for communication with this third party device has been granted by the secure-communications-manager device which is the master associated with this managed device. In the event that a third party device tries to initiate communication with a managed device and prior permission for communication with this third party device has been given to the managed device, then a secure communications channel is set up in a manner which depends on whether or not the third party device itself possesses a secure element. If the third party device does possess a secure element then a secure communications channel can be set up between the managed device and the third party device without further intervention of the secure-communications-manager device associated with this managed device. On the other hand, if the third party device does not possess a secure element then the secure-communications-manager device makes use of data from its secure element to set up secure communications channels with the managed device and the third party device. In the subsequent communications between the third party device and the managed device, messages transit via the secure-communications-manager device.

An example of the present invention provides a secure-communications-manager device for managing secure communications between devices in a network, comprising: an authorization module configured to determine whether or not a first communications device is authorized to communicate with a second communications device; a security-policy-specifying module configured to output to said second communications device security policy rules which prevent or permit communications between said second communications device and said first communications device, dependent on a determination made by the authorization module; and a secure-communications-channel setup module configured to setup a secure communications channel between said second communications device and said first communications device using data provided by a secure element associated with said secure-communications-manager device.

By virtue of the fact that it controls the security policy of the second communications device, and makes use of data provided by its own secure element, the secure-communications-manager device can ensure that the communications made by that managed device are secure, even in a case where the managed communications device does not possess a secure element.

In the aforementioned secure-communications-manager device, the secure-communications channel setup module may be configured to operate in first and second modes, wherein: in the first mode the secure-communications-channel setup module is configured to cause transmission to the second communications device of unique identification data indicative of the identity of a user, said unique identification data being adapted to enable the second communications device to set up a secure communications channel with a first communications device that possesses a secure element, and in the second mode the secure-communications-channel setup module is configured to set up a first secure communications channel between the secure-communications manager device and the second communications device, and to set up a second secure communications channel between the secure-communications manager device and a first communications device that does not possess a secure element, and to enable communications between the first and second communications devices to take place using the first and second secure communications channels.

The two different operating modes of the secure-communications-channel setup module make it possible to ensure that a secure communications channel can be set up between the second (managed) communications device and the first communications device, in a manner appropriate to the security capabilities of the first communication device.

The secure-communications-manager device may include a secure-element detection module configured to determine whether or not the first communications device has a secure element, and an operating-mode selection module configured to select the first mode of operation of the secure-communications-channel setup module when the secure-element detection module determines that the first communications device possesses a secure element, and to select the second mode of operation of the secure-communications-channel setup module when the secure-element detection module determines that the first communications device does not possess a secure element.

By virtue of the secure-element detection module the secure-communications-manager device can determine whether or not a first communications device seeking to communicate with the second communications device has, or does not have, a secure element and can select an operating mode, for the secure-communications-channel setup module, that is appropriate to the detected security capabilities of the first communications device.

Another example of the invention provides a method of managing secure communications between devices in a network, the method comprising the steps of:
determining, in a secure-communications-manager device, whether or not a first communications device is authorized to communicate with a second communications device;
said secure-communications-manager device outputting, to said second communications device, security policy rules which prevent or permit communications between said second communications device and said first communications device, dependent on the determination made in the authorization-determining step; and
setting up a secure communications channel between said second communications device and said first communications device using data provided by a secure element associated with said secure-communications-manager device.

In the aforementioned secure-communications-management method, the secure-communications-channel setup step may comprise the secure-communications-manager device transmitting to the second communications device unique identification data indicative of the identity of a user, said unique identification data being adapted to enable the second communications device to set up a secure communications channel with a first communications device that possesses a secure element.

In the aforementioned secure-communications-management method, the secure-communications-channel setup step may comprise the secure-communications-manager device setting up a first secure communications channel between the secure-communications manager device and the second communications device, and setting up a second secure communications channel between the secure-communications manager device and a first communications device that does not have a secure element, whereby secure communications between the first and second communications devices take place using the first and second secure communications channels.

The secure-communications-management method may include the step of determining whether or not the first communications device has a secure element.

A further example of the invention provides a computer program comprising instructions for performing the aforementioned method when the program is executed by a processor. A still further example of the invention provides a recording medium bearing such a computer program.

A still further example of the invention provides a managed communications device, as configured to be managed by an associated secure-communications-manager device having a secure element, the managed communications device comprising:
a security policy module for determining, by reference to security policy rules, whether or not the managed communications device is allowed to communicate with other communications devices;
a receiver module configured to receive, from said associated secure-communications-manager device, security policy rules indicative of the authorization of other communications devices to access services provided by said managed communications device, wherein the managed communications device is configured not to allow communications to be established with another communications device unless the receiver module has received, from said associated secure-communications-manager device, security policy rules indicative of the authorization of said another communications device to access services provided by said managed communications device; and
a communications module configured to communicate with another communications device using a secure channel established using data provided by the secure element associated with said secure-communications-manager device.

Further features and advantages of the present invention will become apparent from the following description of embodiments thereof, given by way of example, and illustrated with reference to the drawings described hereinafter.

### Brief Description of the Drawings

Fig.1 illustrates a dynamic network environment containing communications devices having different security capabilities, in which:
Fig.1A illustrate a first group of devices present in a locality at a first time, and
Fig.1B illustrates a modified group of devices present in the locality at a second time;
Fig.2 is a diagram illustrating an example of an extended network containing a secure-communications-manager device and managed devices according to an embodiment of the invention;
Fig.3 is a diagram illustrating one example method for establishing a master-slave relationship between a secure-communications-manager device and a managed device;
Fig.4 is a diagram illustrating processes involved in authentication when a managed device according to an embodiment of the invention seeks to access a service provided by a third party device;
Fig.5 is a diagram illustrating schematically an access attempt by a third party device to a managed device according to an embodiment of the invention;
Fig.6 illustrates a case where a secure-communications-manager (master) device controls a managed (slave) device to establish a secure communication channel directly with a third party device;
Fig.7 illustrates a case where a security-management (master) device controls a managed (slave) device to establish a secure communication channel with a third party device via the secure-communications-manager device;
Fig.8 illustrates an example of a procedure for enabling a secure communications channel to be established between a wireless printer and the mobile telephone of a visiting person, in which:
Figs.8A, 8B and 8C illustrate different stages in the procedure; and
Fig.9 is a block diagram illustrating functional components of a secure-communications-manager device according to one embodiment of the invention.

### Detailed Description of the Embodiments

According to an embodiment of the present invention a user can configure his devices so that a communications device which possesses a secure element can enable his other devices - notably his other devices which do not have a secure element but which have communication capabilities - to engage in secure communications irrespective of the security capabilities of the device with which the managed device seeks to communicate. Considering the example illustrated in Fig.1, user Alice may use the invention to configure her devices so that her mobile telephone MT1 - which possesses a secure element - can enable her printer PT1, her laptop LT1 and her desktop computer DC1 to engage in secure communications with third party devices. Naturally, communications between her mobile telephone MT1 and her other devices will also be implemented as secure communications.

It will be noted that, in the drawings, devices which are marked with the symbol of a closed padlock are devices that possess a secure element (either embedded, or held locally or remotely) and devices marked with the symbol of an open padlock are devices that do not have a secure element.

The following description refers to example situations in which a manager device having a secure element controls the setting-up of a secure communications channel for a managed (slave) device which does not itself possess a secure element. However, the present invention is not limited to the case where the slave device lacks a secure element; even a device having its own secure element may be configured as a managed (slave) device, depending on the application. For example, it may be desired to configure a child's mobile telephone, which possesses a secure element, as a slave device to a parent's mobile telephone, so that the parent can ensure that all communications engaged in by the child's mobile telephone will be secure.

In order to make use of the present embodiment of the invention, a user first selects one of his/her communications devices that possesses a secure element and installs therein a secure-communications-manager computer program according to the present embodiment of the invention, thus configuring the selected device as a secure-communications-manager device according to the present embodiment. In a similar manner, the user selects one or more of his/her other communications devices (for example, a device which lacks a secure element) and installs therein a managed-device computer program according to the present embodiment of the invention. When the managed-device computer program has been installed on a target device that target device is in a state suitable to be configured as a managed device (i.e. a device that can engage in secure communications under management by a secure-communications-manager device according to this embodiment of the invention). However, in order to set-up the management, it is also necessary for the target device to implement an association protocol so as to establish a master-slave relationship with the secure-communications-manager device. Typically, the relevant steps of the association protocol form part of the secure-communications-manager computer program and the managed-device computer program, respectively.

It should be noted that the present invention is not limited to the case where two different computer programs are used to configure the communications devices as manager or managed devices, respectively. According to the present invention a common computer program, including a set-up module which handles the choice of manager/managed status, may be used to configure devices as manager or managed devices. Typically, the set-up module of the common computer program enables the user to select "manager" or "managed" status for the device in question, notably depending on the security capability of this device (embedded secure element, password protection, etc.). Accordingly, in this text references to a "managed-device computer program" are intended to cover any computer program - including such a common computer program - which operates to configure a device as a managed device according to the present invention. In a similar way, in this text references to a "secure-communications-manager computer program" are intended to cover any computer program - including such a common computer program - which operates to configure a device as a secure-communications-manager device according to the present invention.

The present invention is not particularly limited having regard to the methods that master and slave devices can use to communicate with each other: it may be via a mobile telecommunications network, wi-fi, Ethernet, Bluetooth, Zigbee, or any other convenient system/communication channel. A slave device may be connected in a different network from the network in which its master device is connected, and the master and slave devices do not need to be in the same geographical location. This aspect of the invention is illustrated by Fig.2, which shows an example situation in which a secure-communications-manager device SCM situated in a first locality P is the master device for four slave devices, Mgd1 to Mgd4, only two of which are situated in the same locality. Slave devices Mgd3 and Mgd4 are remote from their master secure-communications-manager device SCM: slave device Mgd3 is situated in a locality Q and slave device Mgd4 is situation in a different locality R. Communications between the master device SCM and the slave device Mgd3 make use of the mobile telecommunications network (illustrated schematically using symbols PYL illustrating pylons). Communications between the master device SCM and the slave device Mgd4 take place over the internet (illustrated schematically using a symbol SVR illustrating a server).

The following description provides :
- a description of an example of a method for establishing a master-slave relationship between a wireless-communications device configured as a secure-communications-manager device according to the present embodiment of the invention and a wireless communications device loaded with a managed-device computer program according to the present embodiment, and
- a description of examples of methods whereby the secure-communications-manager establishes a secure channel for communications engaged in by a managed device, after a master-slave relationship has been established between them.

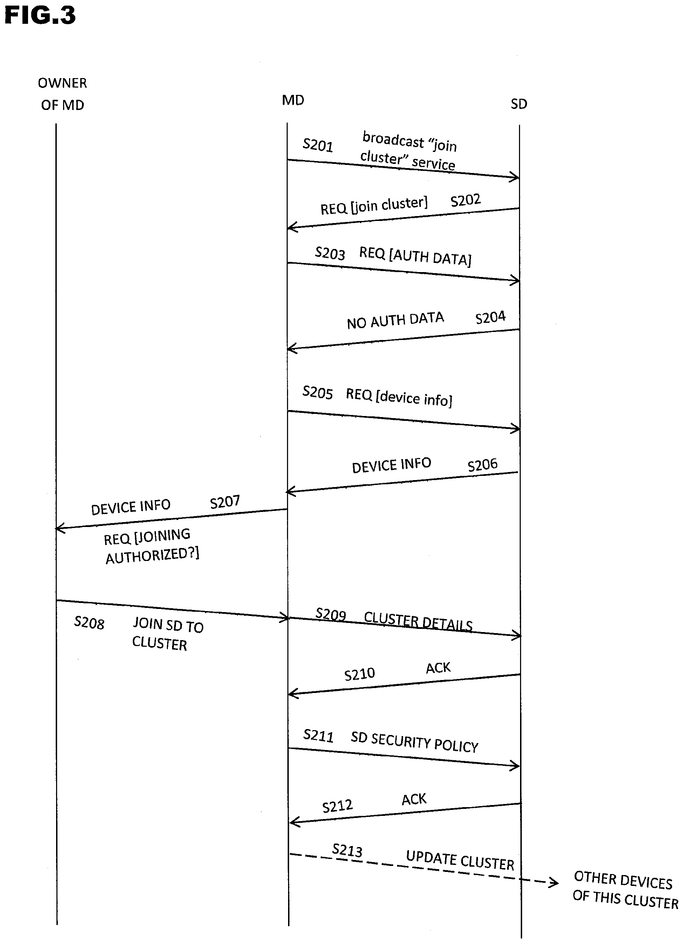

Various methods exist for establishing a master-slave relationship between two devices which communicate with each other. The present invention is not particularly limited having regard to the method that is used for establishing the master-slave relationship between a communications device having an SE and another communications device which has been selected to be its slave. Indeed, the appropriate method may depend on the specific technology via which the devices communicate. However, for the purposes of illustration, one example of a possible method is described below. Fig.3 illustrates the content of messages exchanged - between a master device MD, its future slave device SD and the owner O of the master device MD - during implementation of this example method for establishing the master-slave relationship.

As illustrated at the top of Fig.3, in this example method a wireless communications device MD having an SE and configured as a secure-communications-manager device (master device) according to the present embodiment of the invention is activated to broadcast a signal advertising the fact that it offers a "join cluster" service (step S201). This "join cluster" service allows another device to acquire the status of "slave" to this master device MD provided that the slave device has installed a managed-device computer program according to the present embodiment of the invention. In this example method a second wireless communications device SD (which has a managed-device computer program installed) detects the signal broadcast from the master device MD and sends back to MD a signal requesting to use the "join cluster" service (step S202).

At this stage in the process it may be appropriate for the master device to provide authentication, notably if the slave and master devices are operating in the context of a larger network, such as that illustrated in Fig.2 (in a home network environment the user may have the option of configuring the system so that authentication of the master device is not required). Authentication of the master device will typically require the slave device to contact a certification authority to check credentials (public key, digital signature, or the like) provided by the master device.

After any necessary authentication of the master device, the master device MD then seeks to determine whether the "join cluster" request comes from a device having a secure element or a device that does not have a secure element. More particularly, the device MD sends the requester device SD a message requesting authentication information (step S203). In this instance the device SD does not possess a secure element and does not have authentication information. Accordingly the device SD sends a signal to the device MD indicating that no authentication information can be provided (step S204). In the case of a device SD which possesses a secure element, the device SD would respond to the message requesting authentication by transmitting authentication information to the master device MD in step S204. Alternatively, depending on the security requirements of the intended application, steps S203 and S204 may be omitted.

Next, in a case where the master device MD has not been provided with authentication information, the master device MD requests the device SD to provide device information which, typically, will include a unique identification information applicable to device SD, e.g. the Media Access Control address of device SD, a name assigned to device SD (step S205), etc. In this instance the device SD provides device information to the device MD (in step S206) and this device information includes identification information that we shall designate ID(SD). In step S207 the master device MD presents the received authentication information or identification information ID(SD) to the user, i.e. the owner of MD, typically by displaying the authentication information or ID(SD) on a screen (for example a screen provided on master device MD). However, it should be noted that the authentication/identification information may be presented to the user in any convenient manner, including methods which make use of devices external to MD.

If the authentication/identification information received from the device SD indicates that this device SD is a device belonging to the user (owner of MD), then the user will probably wish this device to "join the cluster". What is meant by "joining the cluster" can be different depending on the application. However, at the least, the process of joining the cluster means that the device SD acquires slave status relative to the master device MD, and the master device MD will, while SD remains in the cluster, make the communications that the slave device SD engages in secure. De facto the master device MD controls which devices and/or users are allowed to communicate with its slave device(s) because slave devices are configured to communicate only with devices authorized by the master device.

A communications device having a SE and configured as a secure-communications-manager device (master device MD) according to the present embodiment of the invention can establish a master-slave relationship with a group of one or more other communications devices (SD). In some applications the master device MD may be configured to manage a group of its slave devices as a "trust cluster", wherein the slave devices in the trust cluster are considered to be "trusted" by one another (and by the master device MD). For the time being it is sufficient to mention that data exchange in a cluster is performed through a secure communications channel. Secure channels that may be suitable for this purpose include, but are not limited to, virtual private networks (VPN), Internet protocol Security (IPsec), Hypertext Transfer Protocol Secure (HTTPS), Secure Sockets Layer (SSL) and Transport Layer Security (TLS).

Returning to Fig.3, if the owner of MD does wish the device SD to join the cluster then the user sends a "join SD to cluster" command to the master device MD (see step S208). Typically the user will input his command to the master device MD by activating operation elements on the master device MD, for example by pressing keys on a keyboard forming part of device MD, by selecting a menu option on a touch screen of MD, etc. However, the user command can be input in any convenient manner (including transmission to MD over a network). Moreover, in a variant of this embodiment, instead of requiring the owner of the master device to explicitly authorize every device that seeks to become a slave of this master device, a list of the user's devices is prepared beforehand and the master device is configured to enslave any device on this list. The owner's authorization may still be required before third party devices can access services that are protected within the cluster managed by this master device.

According to the example method of Fig.3, the master device MD responds to the user command by sending the requester device SD details of the cluster it is joining (step S209). The "cluster details" are different depending on the nature of the cluster. If the requester device SD is joining a "trust cluster" whose member devices are consider to be "trusted" by one another then, typically, the cluster details will include information identifying the member devices, the expiry date/time of the cluster, details of the cluster owner (i.e. the owner of the master device MD), and the like. In a case where the "cluster" corresponds to a binary relationship between a slave device SD and its master device MD, in which the master device provides secure communications for the slave device SD but there is no privileged relationship between this slave device and any other slaves of the same master device, then typically the "cluster details" will include details of the cluster owner (i.e. owner of master device MD) and, optionally, other information such as the type of cluster, the services available in the cluster, etc.

In the example method of Fig.3, the requester device SD responds to reception of the cluster details by sending an acknowledgement-of-receipt signal back to the master device MD (step S210). When the master device MD has received the acknowledgement-of-receipt signal in step S210 it proceeds to step S211 in which it uploads to the requester device SD a security policy that device SD should apply from now on, i.e. while device SD remains in the cluster (or until master device MD updates this slave device's security policy). Once again the requester device sends to the master device MD an acknowledgement-of-receipt signal S212. The managed-device computer program installed on the requester device SD is configured so that after device SD has received the security policy from the master device MD the device SD functions as a slave device to the device MD. More particularly, until the device SD leaves the cluster it has slave status relative to its master device MD and the communications that device SD engages in are controlled by its master device MD, notably because the device SD will not establish communications with a device that has not been authorized by its secure-communications-manager device.

In the example method of Fig.3, a cluster update process S213 is performed if the new slave device has been joined to a "trust cluster" which contains other slave devices. In this cluster update process the master device updates details of the members of the cluster so as to include the new slave device SD (other changes in the cluster details may be made at the same time, if appropriate, for example changes to the security policies of the existing cluster members so as to include policy rules relating to the new slave device). The cluster update may be performed by individually notifying the existing cluster members of the updated details (as illustrated in Fig.3). Alternatively, in a case where the cluster details are held at a central reference point (e.g. a web server), and the members of the cluster consult the central reference point whenever they need details of the cluster, the cluster update process may simply involve the master device MD sending updated cluster details to the central reference point.

Although it is not illustrated in Fig.3, the process of establishing the master-slave relationship may, depending on the application, include a step whereby the master device determines whether the slave device itself possesses a secure element. If the slave device does possess its own secure element then the process of establishing the master-slave relationship may include a step in which the master and slave devices exchange their public keys.

It may be decided, for security reasons, that it is undesirable for the master device MD to make a general broadcast of its "join cluster" service. In a variant of this example method, the master device MD does not make this kind of broadcast: instead, enrolment of slave devices into the cluster is initiated in other ways (e.g. the master device MD may be configured to perform a device discovery process to locate possible candidates to be its slave devices). Additionally, in the case of a master device having wired connections to potential slave devices, the master device may be configured to set up the master-slave association in various ways, for example: the master device may be configured so that when it detects connection of a new device it sets up the master-slave association at that time (plug-and-play), or the master device may be configured to set up the master-slave association according to a request-and-response technique (when a new device wants to "join the cluster" it sends a request to the master device, then the owner of the master device, or a predetermined policy, receiving this request takes the decision whether or not to set up slave status and sends back a response). The request-and-response and plug-and-play technique could also be used in the wireless environment.

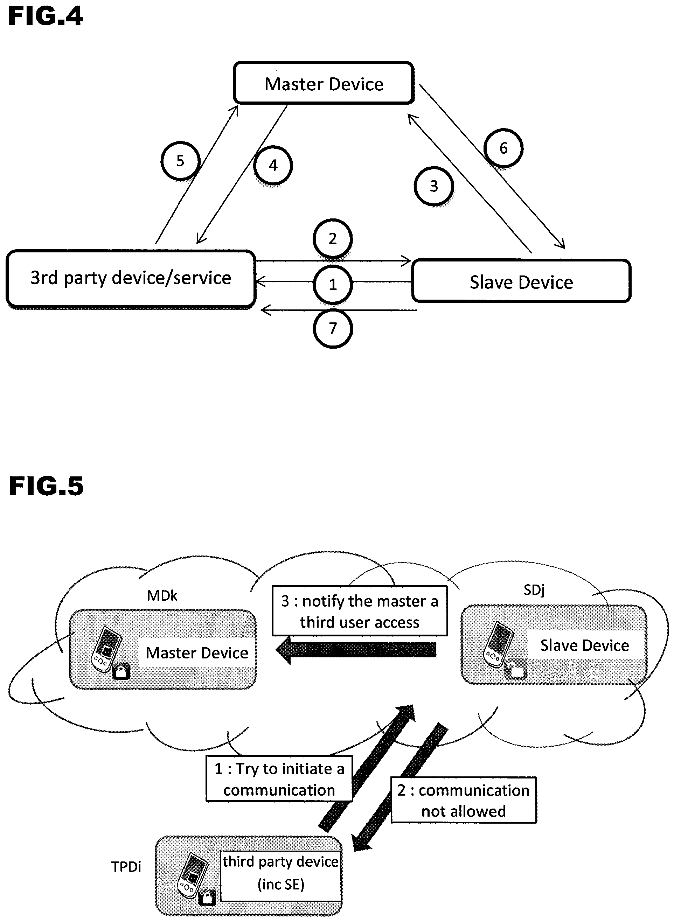

After the master-slave relationship has been established, if the slave device needs to participate in an authentication process - for example, in order to be able to gain access to (or make available) a service/some data/a function in communication with a third party device - the master device MD manages the authentication process on behalf of the slave device SD and, for this purpose, employs the authentication information (keys, tokens, certificates, etc. as required) provided by its secure element. Fig.4 outlines the steps that are performed in one example of such an authentication process when a communications device that has been configured to have slave status according to the present invention seeks to access a service provided by a third party device.

As illustrated in Fig.4, in this example the slave device sends to the third party device a request to access the desired service (stage 1). The third party device responds by requesting the slave device to provide user authentication as well as service authorization (stage 2). The slave device forwards the request to the communications device which is configured as its master device according to the present invention (stage 3). The master device then sends a service authorization request to the third party device, authenticating itself to the third party device before or at the same time as sending this service authorization request (stage 4). The third party device determines whether or not to authorize access to the requested service and sends a service authorization response to the master device (stage 5); the specific application (service) will govern how the third party device determines whether or not to authorize access to the service (e.g. based on possession of a subscription by the master or slave device, based on payment, etc.). The service authorization response includes a password, token or the like that is required in order to be able to access the service in question. The master device then forwards the authorization response to the slave device (stage 6). Finally, the slave device uses the authorization response to gain access to the desired service provided by the third party device (stage 7).

In the case of a slave device which itself possesses a secure element, the slave device is not obliged to employ the technique illustrated in Fig.4 (although it may do so, depending on the application and the certification required). If desired, such a slave device may use authentication data from its own secure element in order to access third party services.

Moreover, while the master-slave relationship remains valid, the slave device SD only accepts commands which modify the security policy that it implements if such commands come from its master device MD. The present invention is not particularly limited with regard to the method the slave device uses to determine whether or onto a command it has received comes from its master device. However, according to one possible method, the slave device SD may be configured to determine the provenance of received commands by checking that the command is a message encrypted using the master device's private key (the master device will have encrypted the command using its private key and, as the slave devices have the master device's public key, they can make sure a command is from master device). Typically the slave device is configured to perform this process at the start of every new communication session.

A description will now be given of how a secure-communications-management device (master device) configured according to the present embodiment of the invention establishes secure communications for an associated managed device (slave device) when a master-slave relationship has been established between the devices. It may be considered that the process of establishing the master-slave relationship constitutes a "set-up phase" of an overall secure-communications-management method and the subsequent processes in which specific secure communications channels are set up between the slave device and other devices constitutes an "exploitation" phase of the secure-communications-management method.

According to a first embodiment of the exploitation phase, the managed-device computer program that is installed on the slave device configures the slave device so that when it receives a message/signal from any communications device it refers to its security policy in order to decide what to do. The slave device may be configured to treat any attempt that a third party device and/or user makes to initiate communication with it as a "request for access" that must be vetted by reference to the slave device's security policy. If the security policy already lists the third party device/user as a device/user which is authorized to access the slave device, and in addition the third party device/user is requesting access of a type permitted to it, then the slave device may operate to satisfy the third party device's request without seeking specific authorization from the master device. This situation may arise, for example, when the third party device is another slave device of the same master device and forms part of a common "trust cluster" with the slave device that is applying the security policy.

On the other hand, if the security policy does not list the third party device as a device which is authorized to access the slave device, or the third party device is requesting access of a type outside the scope specified for it in the security policy, then the configuration of the slave device is such that the slave device will not operate to satisfy the third party device's request unless and until it obtains authorization from its master device.

It should be noted that even in the case where a managed-device (slave) according to the present embodiment applies its security policy to perform a security check - such as comparing a third party device's ID against an access control list - and itself determines that the third party device is authorized to access the slave device, without making fresh contact with its secure-communications-manager (master) device, it may still be considered that the setting up of secure communications for the managed-device (slave) is being managed by the secure-communications-manager device because the managed-device's security policy is under the control of the secure-communications-management device.

The security policy uploaded to the slave device by the master device typically includes an access control list identifying a list of devices that are authorized to access data, services and/or functions provided by this slave device, and associated access times may be specified, for example dates and times when access is permitted, the duration of a single time period (or aggregate duration of multiple time periods) during which the access is permitted, etc. The security policy may include conditions to be satisfied before a particular device, or class of device, is allowed access to data/services/functions. The authorizations defined in the security policy may be global (e.g. "device A is authorized to access all data, services and functions") or they may be individualized by reference to the different types of data, services and functions (e.g. "device A may access services 1, 2 and 4 but not services 3 and 5"). The security policy contains instructions detailing how the slave device should operate in order to secure communications with an authorized device.

In certain embodiments of the invention the slave device is configured so that it will not engage in communications with another communications device in the absence of authorization by the master device. Thus, a slave device may be configured so that, if it cannot decide, by reference to its security policy, that it can go ahead and operate to satisfy the request received from the third party device, then the slave device will automatically prevent communications from being established with the third party device.

Fig.5 illustrates exchanges that may take place when a third party device attempts to communicate with a slave device and the slave device's current security policy does not show the third party device as authorized by the slave device's master device to perform the access being requested. As illustrated in Fig.5, when an unauthorized third party device TPDᵢ attempts to initiate communication with a slave device SDj according to the present embodiment of the invention, the slave device does not allow the communication to become established. In the example illustrated in Fig.5, the slave device transmits a message to the third party device TPDᵢ indicating that communication is refused. However, the invention is not limited to this approach, other techniques may be adopted: for example, the slave device could simply fail to send any response to messages received from unauthorized third party devices such as TPDᵢ.

In the example illustrated in Fig.5, when the slave device SDⱼ receives a message from an unauthorized third party device TPDᵢ it notifies its associated master device MDₖ of the received request. The master device can be configured to respond to this notification in a variety of ways, depending on the application. The master device could simply log the details of the attempted communication, However, typically the master device will engage in communication with the third party device in order to reach a determination of whether or not to authorize the access that the third party device has requested in this instance. If the master device decides not to authorize access then it may simply leave the slave device's security policy unchanged. The master device may be configured such that it seeks input from its owner (user) to confirm whether or not the access requested by this third party device shall be authorized on this occasion. The circumstances in which the master device seeks such user input can be different, depending on the application. For example, the master device may be configured to seek user input only on the first occasion when a given third party device requests access to any/a particular slave device managed by this master device, or only on the first occasion that a third party device owned by a given person requests access to any/a particular slave device managed by this master device, and so on. The user input can be sought by any convenient method and will generally include the steps of: providing the user with information identifying the third party device and the nature of the access it has requested, and offering the user a choice between authorization/refusal of access. Further, the master device may be configured such that when it determines that the third party device has a secure element providing authentication data (e.g. keys, certificates, tokens, etc.) then the master device implements an authentication process directly with the third party device. In the latter case the authentication process may be implemented without requiring explicit input from the owner of the master device provided that each communicating device trusts the certification authority which certifies the authentication information of the other communications device. If desired, the secure-communications-manager device may be configured to always notify its owner of access requests made by third parties (e.g. by making a message appear on a screen).

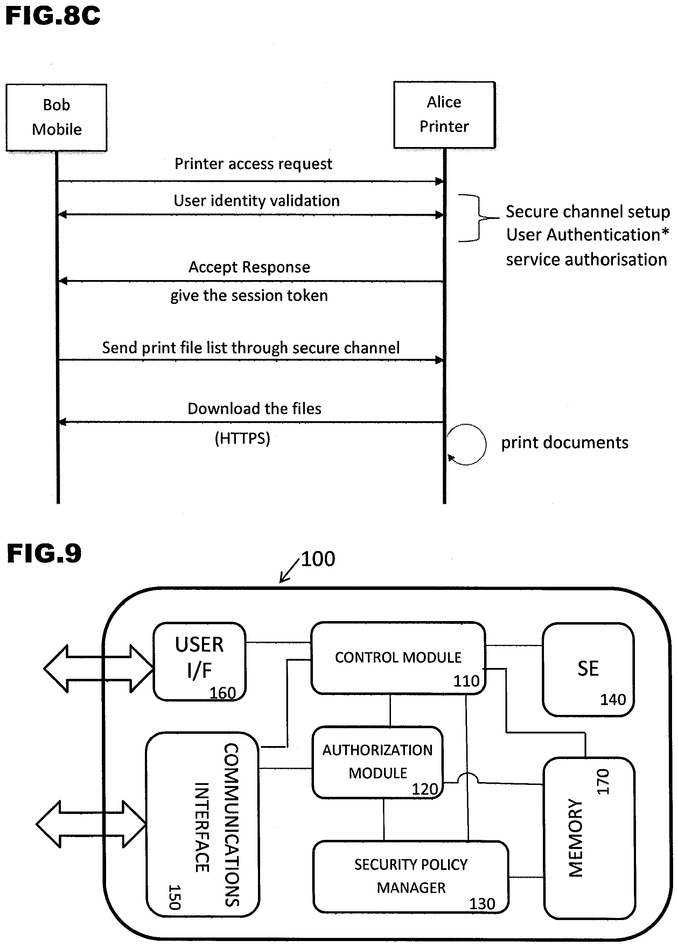

The above-described processes for determining whether or not to authorize a requested third party access to the slave device may be performed by an authorization module 120 of the (master) secure-communications manager device, to be described later on with reference to Fig.9.

When the master device authorizes the requested third party device access (either autonomously or after consultation of the user) it sends a message to the relevant slave device to update that device's security policy to show the determined access rights of the third party device. The security policies of any other trusted slave devices in the same cluster may also be updated, if appropriate. These processes for updating the security policy of the target slave device(s) may be performed by a security-policy manager module 130 to be described later on with reference to Fig.9. Afterwards a secure communication channel may be set up to handle data transfer involved in the requested access. The manager-side processes described below for setting up a secure communications channel may be performed under the control of a control module 110 of the secure-communications manager device, to be described later on with reference to Fig.9, which accesses data held in the secure element of the manager device, controls formulation of security policy rules by the security policy manager module 130 and controls communications with the slave device and third party device through a communications interface 150 (also shown in Fig.9).

According to the present embodiment of the invention, the secure communications channel may be established in different ways dependent on whether or not the requesting third party device has a secure element. Typically, it is the (master) secure-communications-manager device which will determine whether or not a given third party device does, or does not possess a secure element, and which, based on the result of the determination, will select the appropriate method for establishing the secure communications channel. For example, this determination of the possession/lack of a third party device secure element can be made during the communications between the secure-communications-manager device and the third party device at the time when the secure-communications-manager device determines whether or not to authorize access requested by the third party device to a slave device managed by this master device. The determination of whether or not the third party device has a secure element may be made by the control module 110 of the master secure-communications-manager device based on the content of messages exchanged with the third party device via the communications interface 150. The control module 110 may also take the decision of which method to use for establishing the secure channel between the third party device and the slave device. The master device will then inform the slave device - typically by communicating appropriate details in an update of the slave device's security policy - of the appropriate method to use to establish a secure communications channel with this third party device. Typically the master device will inform the slave device of these methods by communicating appropriate details in an update of the slave device's security policy.

However, the present invention is not limited to the case where the master device determines whether or not the third party device possesses a secure element; this determination can be made by the slave device (in communication with the third party device) and the slave device may be configured to change the method it uses for secure channel setup dependent on the result of the determination it makes in this regard..

The present invention is not particularly limited having regard to the processes that are used for secure channel setup (and for the user authentication ancillary to secure channel setup). As one example, the processes defined for these purposes in the Transport Layer Security (TLS) protocol or the similar Secure Socket Layer (SSL) protocol may be applied.

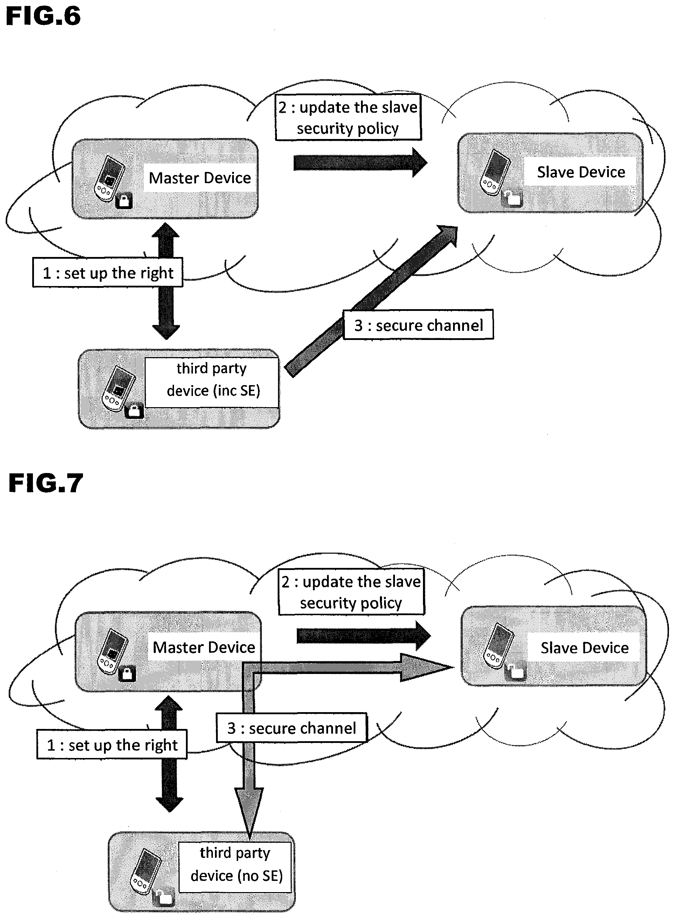

Fig.6 illustrates a case where the requesting third party device has a secure element. In the example illustrated in Fig.6 the secure-communications-management device (master) MD is configured to instruct the third party device and the relevant slave device to set up a direct secure communication channel between them, typically a secure channel using a private key of the third party device provided by that device's secure element. More specifically, when the master device updates the slave device's security policy so as to indicate the access rights granted to the third party device, the master device also transmits to the slave device public key and/or user identity information. The slave device uses this public key/user identity information in a process to set up a secure communications channel with the third party device. It may be considered that the elements of the secure-communications-manager device which handle the setup of the secure communications channel between the third party device and the slave device are operating in a first mode when it has been determined that the third party device has a secure element and secure channel setup is negotiated between the third party device and the slave device.

For example, in a case where the TLS protocol is used for user authentication/secure channel set-up directly between the slave device and the third party device, the master device will have provided the slave device with the third party device's public key/user ID when it updated the slave device's security policy to allow access by this third party device and so, during execution of the TLS protocol the slave device may generate a symmetric session key for the subsequent secure communications, encrypt the session key with the third party device's public key and transmit the encrypted session key to the third party device. The third party device may then retrieve the session key by using the private key provided by the third party device's secure element.

Fig.7 illustrates a case where the requesting third party device does not have a secure element. In the example illustrated in Fig.7 the secure-communications-management device (master) MD is configured to instruct the third party device and the relevant slave device to communicate using a secure communications channel which passes through the master device. More specifically, the master device uses the identification information in its secure element to set up a secure communications channel with the slave device, and the master device uses the identification information in its secure element to set up a secure communications channel with the third party device. For example, in a case where the TLS protocol is used for user authentication/secure channel set-up between the mater device and the slave device, and between the master device and the third party device, the following steps may be performed. During execution of the TLS protocol between the master device and the slave device, the slave device may generate a first symmetric session key for the subsequent secure communications channel between the master and slave devices, encrypt the first session key with the master device's public key and transmit the encrypted first session key to the master device. The master device may then retrieve the first session key by using the private key provided by the master device's secure element. Likewise, during execution of the TLS protocol between the master device and the third party device, the third party device may generate a second symmetric session key for the subsequent secure communications channel between the master and third party devices, encrypt the second session key with the master device's public key and transmit the encrypted second session key to the master device. The master device may then retrieve the second session key by using the private key provided by the master device's secure element.

Depending on the application and service requirements, the same session key may be used for the first and second communications channels so that, in effect, there is a single secure communications channel.

In the case illustrated in Fig.7, when the master device updates the security policy of the slave device to indicate the access rights granted to the third party device (what service it can access, expiry of this access right, etc.), the master device also sends the slave device the third party device's public key/user ID information.

It may be considered that the elements of the secure-communications-manager device which handle the setup of the secure communications channel between the third party device and the slave device are operating in a second mode when it has been determined that the third party device does not have a secure element and the secure-communications-manger device sets up the secure channels between itself, the third party device and the slave device.

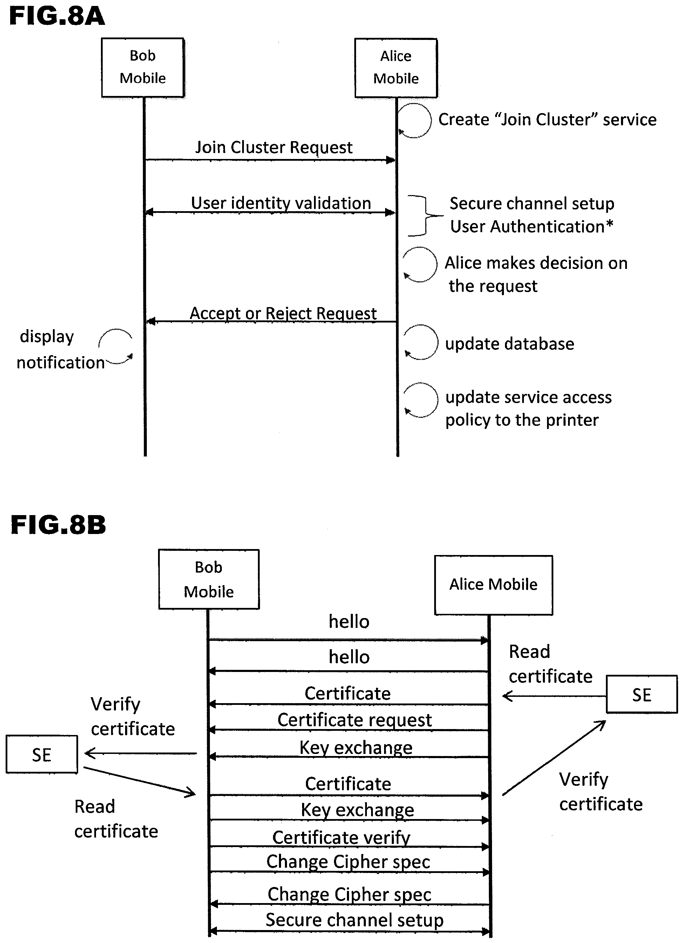

Fig.8 illustrates an example of a procedure for enabling a secure communications channel to be established between Alice's wireless printer PT1 and visitor Bob's mobile telephone MT2 in Fig.1, in a case where Alice's mobile telephone MT1 is configured as a master device according to the present invention and Alice's wireless printer PT1 is configured as a slave to that master device. In this example Bob's mobile telephone has a SIM that constitutes a secure element.

Fig.8A illustrates a first stage in the procedure, showing interaction between Alice's mobile telephone MT1 and Bob's mobile telephone MT2 in order to determine the authorization (or not) of Bob's mobile telephone to access services provided in the cluster controlled by Alice's mobile telephone MT1 (in this instance, access to print services provided by the printer PT1). Alice's mobile telephone MT1 indicates that a "join cluster" service is available and Bob's mobile telephone MT2 responds with the aim of joining the cluster (at least temporarily) and being able to use the wireless printer PT1.

A secure channel setup and user authentication process may be performed as part of the authorization procedure, as indicated by the asterisk in Fig.8A. Fig.8B illustrates the steps in an example of a suitable secure channel setup and authentication process. It will be understood that the example illustrated in Fig.8B illustrates secure channel setup and user authentication processes corresponding to those of the TLS protocol or SSL protocol. However, the invention is not limited to processes provided by those protocols.

In the example illustrated in Fig.8A, Alice decides to allow Bob's mobile telephone MT2 to access her wireless printer PT1 and Alice's mobile telephone MT1 adjusts the security policy of the wireless printer PT1 (its slave device). In this instance Bob's mobile telephone MT2 does not seek to join the cluster as a full member, i.e. MT2 does not seek to become a slave of Alice's mobile telephone MT1 (the secure-communications-manager device for this cluster). In effect Bob's mobile telephone MT2 seeks guest membership of the cluster so that MT2 will be allowed to access services provided in the cluster (within the scope of the security policies specified by the secure-communications-manager device for this cluster, MT1), but the security policy applied by Bob's mobile telephone MT2 will not be controlled by the secure-communications-manager device for this cluster, MT1.

Fig.8C illustrates the subsequent interaction between Bob's mobile telephone MT2 and Alice's wireless printer PT1 which results in the setting up of a secure communications channel so that Bob can print data from his mobile telephone using Alice's wireless printer. As indicated by the asterisk in Fig.8C, this procedure involves a secure channel setup and user authentication process. In this instance, because Bob's mobile telephone MT2 has a secure element, the secure channel setup is performed directly between Bob's mobile telephone MT2 and Alice's wireless printer PT1. Once again, the secure channel setup and user authentication process may be performed according to the TLS or SSL protocol. In this instance, during the user authentication process the wireless printer PT1 makes use of credentials provided to it by Alice's mobile telephone MT1 when the printer's service access policy was updated at the end of the authorization procedure illustrated in Fig.8A.

As indicated above, in general computer programs will be used in order to configure communications devices of known types (mobile telephones, PDAs, tablets, PCs, laptops, headphones, printers, and so on) as secure-communications-manager devices and managed devices according to the invention. The specific program code, protocols, functional modules, message formats and so on that are required in order to provide the communications devices with the functionality mentioned above varies dependent on the specifics of the technical implementation of the communications devices, notably depending on the technology used for communication (Bluetooth, wi-fi, Ethernet, etc.). The skilled person can readily determine, from his general knowledge, program code, protocols, etc. suitable for configuring communications devices as secure-communications-manager devices and managed devices which possess the functionality discussed above and the present invention is not particularly limited with regard to the details of such program code, protocols, etc.

The present invention is not particularly limited having regard to the timing when a given communications device is programmed to enable it to be configured as a secure-communications-manager device and/or managed device according to the invention. For example, the relevant computer program may be loaded and installed by a user after he has bought the communications device in question, or the device as sold could already be pre-programmed with the appropriate software, or the software could be embedded in the device during manufacture. Similarly, it would be possible to provide a communications device with the necessary functionality using hardware elements alone, or using a combination of hardware and software elements.

Fig.9 illustrates a secure-communications-manager device 100 according to one embodiment of the invention. Fig.9 illustrates various functional modules present in the manager device 100. It is to be understood that the functions of the various modules illustrated in Fig.9 could be performed using a greater or lesser number of elements, i.e. functions of several modules could be combined and/or functions may be distributed differently between modules.

Fig.9 only shows functional modules relating to the implementation of the present invention, it does not show elements that may be present in the communications device in view of performing other functions (e.g. telephony, internet access, gaming, etc. in the case of a mobile telephone, printing and ancillary functions in the case of a printer device, etc.). However, it is to be understood that the functional modules illustrated in Fig.9 may be shared by the present invention and such other functions. For example, in a mobile telephone a single control module (processor, CPU, etc) may be used to control secure-communications-manager functions according to the present invention as well as telephony and other functions, the same secure element may be used during implementation of the secure-communications-manager device functions according to the invention as well as for other purposes. Similarly, a communications device embodying a secure-communications-manger device according to the present invention may have a single user interface, communications interface, and so on that are employed for all of its functions (irrespective of whether they be related to the secure-communications-manager functions of the present invention or not).

Moreover, it will be understood that various of the elements illustrated in Fig.9 as being integrated into the secure-communications-manager device 100 could actually be provided as a network service, e.g. the secure element may be a secure unit in cloud storage, or a program running in a secure element or a trusted execution environment, etc., which has similar functions and/or capabilities.

As illustrated in Fig.9, a secure-communications-manager device 100 according to one embodiment of the present invention includes a control module 110 for controlling the other modules illustrated in Fig.9 to perform secure-communications-management functions of the present invention as well as associated communications between devices and with a user. In addition there is an authorization module 120 configured to handle the process of authorizing slave devices, as well as to handle the process of authorizing third party devices to access slave devices, a security-policy manager 130 configured to generate and update security-policy rules for slave devices (notably when a device becomes a slave, or when it is decided to authorize a third party device), a secure element 140 for providing user identification information (keys, certificates, etc.) required for authentication/secure channel setup, a communications interface 150 for handling communications between this communications device and other devices (notably slave devices and third party devices), a user interface for handling communications with a user (i.e. the owner of the communications device embodying the secure-communications-manager device 100), and a memory 170 for storing any necessary data (e.g. details of: slave devices, current security policy rules for each slave device, current access rights granted to third party devise, as well as a log of past data/settings, as desired).

As indicated above, the authorization module 120 illustrated in Fig.9 may handle the above-described processes (e.g. communicating with third party devices, communicating with potential slave devices, communicating with a user, taking authorization decisions based on user input or predetermined policies, etc.) for determining whether or not to authorize a given access to a slave device by a third party device, and for determining whether or not to authorize a device to become a slave device. The security-policy manager module 130 of Fig.9 may handle the above-described processes involved in creating and updating rules for the security policies applied by the slave device(s) and, thus, it may be considered to constitute a security-policy-specifying module configured to output security policy rules to slave devices of the secure-communications-manager device.

As indicated above, the control module 110 illustrated in Fig.9 may handle the above-described processes involved in setting up a secure communications channel between a slave device and a third party device and, thus, it may be considered to constitute a secure-communications-channel setup module. The secure-communications-channel setup module may be considered to operate in a first mode (when the slave device has a secure element) and a second mode (when the third party device does not have a secure element). Moreover, the control module 110 may handle the processes involved in determining whether or not a third party device has a secure element and the processes involved in determining the operating mode of the secure-communications-channel setup module. Thus, the control module 110 may be considered to constitute a secure-element detection module configured to determine whether or not a third party device has a secure element, as well as an operating mode selection module configured to select the first or second operating mode for the secure-communications-channel setup module depending on whether or not the third party device has a secure element.

Although the invention has been described, in its various aspects, with reference to certain specific embodiments it is to be understood that various modifications and improvements can be made without departing from the scope of the invention as defined in the appended claims.

For example, although the above description refers to master devices and third party devices "having" secure elements it should be borne in mind that a secure element may be an element at a remote location which the master device/third party device accesses via the internet or another network, for example using cloud storage. Accordingly, it will be understood that references in the present document to possession of a secure element do not require the secure element to be physically integrated into or co-located with the possessor device.

Although the above description refers to communications devices which possess a single secure element, it is to be understood that the invention may be implemented using devices that possess multiple secure elements, for example a mobile telephone may have a secure SIM as well as a smartcard. Two-factor or multifactor authentication can then be achieved, according to the security requirements of the application.

It is to be understood that references in the present document to "third party devices" are not intended to limit to the case where the device in question belongs to a different owner from the owner of the master or slave devices.

## Claims

1. **A secure-communications-manager device** (MT1) for managing secure communications between devices in a network, comprising:
an authorization module configured to determine whether or not a first communications device (MT2) is authorized to access at least a service provided by a second communications device (PT1);
a security-policy-specifying module configured to output to said second communications device (PT1) security policy rules which prevent or permit communications between said second communications device (PT1) and said first communications device (MT2), dependent on a determination made by the authorization module; and
a secure-communications-channel setup module configured to setup a secure communications channel between said second communications device (PT1) and said first communications device (MT2) using data provided by a secure element associated with said secure-communications-manager device (MT1), said secure-communications-channel setup module being configured to operate in either a first mode when the first communications device (MT2) possesses a secure element, or in a second mode when the first communications device (MT2) does not possess a secure element, wherein:
- in the first mode, the secure-communications-manager device is configured to instruct the first and the second communications devices (MT2, PT1) to set up a direct secure communications channel between the second communications device (PT1) and the first communications device (MT2), and
- in the second mode, a first secure communications channel is setup between the secure-communications manager device (MT1) and the second communications device (PT1), and a second secure communications channel is set up between the secure-communications manager device (MT1) and the first communications device (MT2), and the secure-communications manager device (MT1) is configured to enable communications between the first and second communications devices (MT2, PT1) to take place using the first and second secure communications channels.

2. The secure-communications-manager device according to claim 1, wherein in the first mode, the secure-communications-channel setup module is configured to cause transmission to the second communications device (PT1) of unique identification data indicative of the identity of a user, said unique identification data being adapted to enable the second communications device (PT1) to set up the secure communications channel with the first communications device (MT2).

3. The secure-communications-manager device according to claim 1 or 2, and comprising:
a secure-element detection module configured to determine whether or not the first communications device (MT2) has a secure element, and
an operating-mode selection module configured to select the first mode of operation of the secure-communications-channel setup module when the secure-element detection module determines that the first communications device (MT2) possesses a secure element, and to select the second mode of operation of the secure-communications-channel setup module when the secure-element detection module determines that the first communications device (MT2) does not possess a secure element.

4. **A method of managing secure communications** between devices in a network, the method comprising the steps of:
determining, in a secure-communications-manager device (MT1), whether or not a first communications device (MT2) is authorized to access at least a service provided by a second communications device (PT1);
said secure-communications-manager device (MT1) outputting, to said second communications device (PT1), security policy rules which prevent or permit access to at least a service provided by the second communications device (PT1) from the first communications device (MT2), dependent on the determination made in the authorization-determining step; and
setting up a secure communications channel between said second communications device (PT1) and said first communications device (MT2) using data provided by a secure element associated with said secure-communications-manager device (MT1), said secure-communications-channel setup step comprising:
- if the first communications device (MT2) possesses a secure element, the secure-communications-manager device instructing the first and the second communications devices (MT2, PT1) to set up a direct secure communication channel between the second communications device (PT1) and the first communications device (MT2), and
- if the first communications device (MT2) does not possess a secure element, the setting up, by the secure-communications-manager device (MT1), of a first secure communications channel between the secure-communications-manager device (MT1) and the second communications device (PT1), and of a second secure communications channel between the secure-communications-manager device (MT1) and the first communications device (MT2), whereby secure communications between the first (MT2) and second (PT1) communications devices is enabled by the secure-communications-manager device (MT1) to take place using the first and second secure communications channels.

5. The secure-communications-management method according to claim 4, wherein, if the first communications device (MT2) possesses a secure element, the secure-communications-channel setup step comprises the secure-communications-manager device (MT1) transmitting to the second communications device (PT1) unique identification data indicative of the identity of a user, said unique identification data being adapted to enable the second communications device (PT1) to set up a secure communications channel with the first communications device (MT2).

6. The secure-communications-management method according to claim 5, further comprising a step of determining whether or not the first communications device (MT2) has a secure element.

7. **A computer program** comprising instructions for performing a method according to any one of claims 4 to 6 when said program is executed by a processor.

8. **A recording medium** bearing a computer program according to claim 7.

9. **A system comprising a managed communications device (PT1)** configured to be managed by a secure-communications-manager device (MT1), and the secure-communications manager device (MT1), wherein the secure-communications-manager device (MT1) is according to any one of claims 1 to 3, the managed communications device comprising:
a security policy module for determining, by reference to security policy rules, whether or not the managed communications device (PT1) is allowed to communicate with other communications devices (MT2, LT2);
a receiver module configured to receive, from said associated secure-communications-manager device (MT1), security policy rules indicative of whether or not other communications devices (MT2, LT2) are authorized to access at least a service provided by said managed communications device, the managed communications device (PT1) being configured not to allow communications to be established with another communications device (MT2) unless the receiver module has received, from said associated secure-communications-manager device (MT1), security policy rules indicative of the authorization of said another communications device (MT2) to access to at least a service provided by said managed communications device (PT1); and
a communications module configured to communicate with another communications device (MT2) using a secure channel established using data provided by a secure element associated with said secure-communications-manager device (MT1).

## Patentansprüche

1. Managementvorrichtung (MT1) für sichere Kommunikation für das Management einer sicheren Kommunikation zwischen Vorrichtungen in einem Netz, die Folgendes umfasst:
ein Autorisierungsmodul, das konfiguriert ist, zu bestimmen, ob eine erste Kommunikationsvorrichtung (MT2) autorisiert ist, auf wenigstens einen Dienst zuzugreifen, der durch eine zweite Kommunikationsvorrichtung (PT1) bereitgestellt wird;
ein Modul zum Spezifizieren einer Sicherheitsstrategie, das konfiguriert ist, an die zweite Kommunikationsvorrichtung (PT1) Sicherheitsstrategieregeln auszugeben, die eine Kommunikation zwischen der zweiten Kommunikationsvorrichtung (PT1) und der ersten Kommunikationsvorrichtung (MT2) in Abhängigkeit von einer durch das Autorisierungsmodul vorgenommenen Bestimmung verhindern oder erlauben; und
ein Modul zum Einrichten eines Kanals für sichere Kommunikation, das konfiguriert ist, einen Kanal für sichere Kommunikation zwischen der zweiten Kommunikationsvorrichtung (PT1) und der ersten Kommunikationsvorrichtung (MT2) unter Verwendung von Daten, die durch ein der Managementvorrichtung (MT1) für sichere Kommunikation zugeordnetes sicheres Element bereitgestellt werden, einzurichten, wobei das Modul zum Einrichten eines Kanals für sichere Kommunikation konfiguriert ist, entweder in einer ersten Betriebsart zu arbeiten, wenn die erste Kommunikationsvorrichtung (MT2) ein sicheres Element besitzt, oder in einer zweiten Betriebsart zu arbeiten, wenn die erste Kommunikationsvorrichtung (MT2) kein sicheres Element besitzt, wobei:
- in der ersten Betriebsart die Managementvorrichtung für sichere Kommunikation konfiguriert ist, die erste und die zweite Kommunikationsvorrichtung (MT2, PT1) anzuweisen, einen direkten Kanal für sichere Kommunikation zwischen der zweiten Kommunikationsvorrichtung (PT1) und der ersten Kommunikationsvorrichtung (MT2) einzurichten, und
- in der zweiten Betriebsart ein erster Kanal für sichere Kommunikation zwischen der Managementvorrichtung (MT1) für sichere Kommunikation und der zweiten Kommunikationsvorrichtung (PT1) eingerichtet wird und ein zweiter Kanal für sichere Kommunikation zwischen der Managementvorrichtung (MT1) für sichere Kommunikation und der ersten Kommunikationsvorrichtung (MT2) eingerichtet wird,
wobei die Managementvorrichtung (MT1) für sichere Kommunikation konfiguriert ist, zu ermöglichen, dass eine Kommunikation zwischen der ersten und der zweiten Kommunikationsvorrichtung (MT2, PT1) unter Verwendung des ersten und des zweiten Kanals für sichere Kommunikation stattfindet.

2. Managementvorrichtung für sichere Kommunikation nach Anspruch 1, wobei das Modul zum Einrichten eines Kanals für sichere Kommunikation in der ersten Betriebsart konfiguriert ist, eine Übertragung an die zweite Kommunikationsvorrichtung (PT1) eindeutiger Identifizierungsdaten, die die Identität eines Anwenders angeben, zu veranlassen, wobei die eindeutigen Identifizierungsdaten dafür ausgelegt sind, der zweiten Kommunikationsvorrichtung (PT1) zu ermöglichen, den Kanal für sichere Kommunikation mit der ersten Kommunikationsvorrichtung (MT2) einzurichten.

3. Managementvorrichtung für sichere Kommunikation nach Anspruch 1 oder 2, die Folgendes umfasst:
ein Modul zum Detektieren eines sicheren Elements, das konfiguriert ist, zu bestimmen, ob die erste Kommunikationsvorrichtung (MT2) ein sicheres Element besitzt oder nicht, und
ein Modul für die Auswahl der Betriebsart, das konfiguriert ist, die erste Betriebsart des Moduls zum Einrichten eines Kanals für sichere Kommunikation auszuwählen, wenn das Modul zum Detektieren der Betriebsart bestimmt, dass die erste Kommunikationsvorrichtung (MT2) ein sicheres Element besitzt, und die zweite Betriebsart des Moduls zum Einrichten eines Kanals für sichere Kommunikation auszuwählen, wenn das Modul zum Detektieren eines sicheren Elements bestimmt, dass die erste Kommunikationsvorrichtung (MT2) kein sicheres Element besitzt.

4. Verfahren zum Managen einer sicheren Kommunikation zwischen Vorrichtungen in einem Netz, wobei das Verfahren die folgenden Schritte umfasst:
Bestimmen in einer Managementvorrichtung (MT1) für sichere Kommunikation, ob eine erste Kommunikationsvorrichtung (MT2) für den Zugriff auf wenigstens einen Dienst, der durch eine zweite Kommunikationsvorrichtung (PT1) bereitgestellt wird, autorisiert ist;
wobei die Managementvorrichtung (MT1) für sichere Kommunikation an die zweite Kommunikationsvorrichtung (PT1) Sicherheitsstrategieregeln ausgibt, die einen Zugriff auf wenigstens einen durch die zweite Kommunikationsvorrichtung (PT1) bereitgestellten Dienst von der ersten Kommunikationsvorrichtung (MT2) in Abhängigkeit von der in dem Autorisierungsbestimmungschritt vorgenommenen Bestimmung verhindern oder erlauben; und
Einrichten eines Kanals für sichere Kommunikation zwischen der zweiten Kommunikationsvorrichtung (PT1) und der ersten Kommunikationsvorrichtung (MT2) unter Verwendung von Daten, die durch ein sicheres Element, das der Managementvorrichtung (MT1) für sichere Kommunikation zugeordnet ist, bereitgestellt werden, wobei der Schritt zum Einrichten eines Kanals für sichere Kommunikation Folgendes umfasst:
- falls die erste Kommunikationsvorrichtung (MT2) ein sicheres Element besitzt, Anweisen, durch die Managementvorrichtung für sichere Kommunikation, der ersten und der zweiten Kommunikationsvorrichtung (MT2, PT1), einen direkten Kanal für sichere Kommunikation zwischen der zweiten Kommunikationsvorrichtung (PT1) und der ersten Kommunikationsvorrichtung (MT2) einzurichten; und
- falls die erste Kommunikationsvorrichtung (MT2) kein sicheres Element besitzt, Einrichten, durch die Managementvorrichtung (MT1) für sichere Kommunikation, eines ersten Kanals für sichere Kommunikation zwischen der Managementvorrichtung (MT1) für sichere Kommunikation und der zweiten Kommunikationsvorrichtung (PT1) und eines zweiten Kanals für sichere Kommunikation zwischen der Managementvorrichtung (MT1) für sichere Kommunikation und der ersten Kommunikationsvorrichtung (MT2), wobei das Stattfinden einer sicheren Kommunikation zwischen der ersten Kommunikationsvorrichtung (MT2) und der zweiten Kommunikationsvorrichtung (PT1) durch die Managementvorrichtung (MT1) für sichere Kommunikation unter Verwendung des ersten und des zweiten Kanals für sichere Kommunikation ermöglicht wird.

5. Verfahren zum Managen einer sicheren Kommunikation nach Anspruch 4, wobei dann, wenn die erste Kommunikationsvorrichtung (MT2) ein sicheres Element besitzt, der Schritt zum Einrichten eines Kanals für sichere Kommunikation umfasst, dass die Managementvorrichtung (MT1) für sichere Kommunikation an die zweite Kommunikationsvorrichtung (PT1) eindeutige Identifizierungsdaten, die die Identität eines Anwenders angeben, überträgt, wobei die eindeutigen Identifizierungsdaten dafür ausgelegt sind, der zweiten Kommunikationsvorrichtung (PT1) zu ermöglichen, einen Kanal für sichere Kommunikation mit der ersten Kommunikationsvorrichtung (MT2) einzurichten.

6. Verfahren zum Managen einer sicheren Kommunikation nach Anspruch 5, das ferner einen Schritt des Bestimmens, ob die erste Kommunikationsvorrichtung (MT2) ein sicheres Element besitzt, umfasst.

7. Computerprogramm, das Befehle enthält, um ein Verfahren nach einem der Ansprüche 4 bis 6 auszuführen, wenn das Programm durch einen Prozessor ausgeführt wird.

8. Aufzeichnungsmedium, das ein Computerprogramm nach Anspruch 7 trägt.

9. System, das eine gemanagte Kommunikationsvorrichtung (PT1), die konfiguriert ist, durch eine Managementvorrichtung (MT1) für sichere Kommunikation gemanagt zu werden, und diese Managementvorrichtung (MT1) für sichere Kommunikation umfasst, wobei die Managementvorrichtung (MT1) für sichere Kommunikation eine Vorrichtung nach einem der Ansprüche 1 bis 3 ist und wobei die gemanagte Kommunikationsvorrichtung Folgendes umfasst:
ein Sicherheitsstrategiemodul zum Bestimmen unter Bezugnahme auf Sicherheitsstrategieregeln, ob die gemanagte Kommunikationsvorrichtung (PT1) mit anderen Kommunikationsvorrichtungen (MT2, LT2) kommunizieren darf;
ein Empfängermodul, das konfiguriert ist, von der zugeordneten Managementvorrichtung (MT1) für sichere Kommunikation Sicherheitsstrategieregeln zu empfangen, die angeben, ob Kommunikationsvorrichtungen (MT2, LT2) für den Zugriff auf wenigstens einen durch die gemanagte Kommunikationsvorrichtung bereitgestellten Dienst autorisiert sind oder nicht, wobei die gemanagte Kommunikationsvorrichtung (PT1) konfiguriert ist, den Aufbau einer Kommunikation mit einer weiteren Kommunikationsvorrichtung (MT2) nicht zuzulassen, solange das Empfängermodul von der zugeordneten Managementvorrichtung (MT1) für sichere Kommunikation keine Sicherheitsstrategieregeln empfangen hat, die die Autorisierung der weiteren Kommunikationsvorrichtung (MT2) für den Zugriff auf wenigstens einen durch die gemanagte Kommunikationsvorrichtung (PT1) bereitgestellten Dienst angeben; und
ein Kommunikationsmodul, das konfiguriert ist, mit einer weiteren Kommunikationsvorrichtung (MT2) unter Verwendung eines sicheren Kanals zu kommunizieren, der unter Verwendung von Daten aufgebaut wird, die durch ein der Managementvorrichtung (MT1) für sichere Kommunikation zugeordnetes sicheres Element bereitgestellt werden.

## Revendications

1. Dispositif gestionnaire (MT1) de communications sécurisées destiné à gérer des communications sécurisées entre des dispositifs dans un réseau, comportant :
un module d'autorisation configuré pour déterminer si un premier dispositif (MT2) de communications est autorisé ou non à accéder à au moins un service fourni par un second dispositif (PT1) de communications ;
un module de spécification de politique de sécurité configuré pour délivrer audit second dispositif (PT1) de communications des règles de politique de sécurité qui empêchent ou permettent des communications entre ledit second dispositif (PT1) de communications et ledit premier dispositif (MT2) de communications, en fonction d'une détermination effectuée par le module d'autorisation ; et
un module d'établissement de canaux de communications sécurisées configuré pour établir un canal de communications sécurisées entre ledit second dispositif (PT1) de communications et ledit premier dispositif (MT2) de communications en utilisant des données fournies par un élément sécurisé associé audit dispositif gestionnaire (MT1) de communications sécurisées, ledit module d'établissement de canaux de communications sécurisées étant configuré pour fonctionner soit dans un premier mode lorsque le premier dispositif (MT2) de communications possède un élément sécurisé, soit dans un second mode lorsque le premier dispositif (MT2) de communications ne possède pas d'élément sécurisé :
- dans le premier mode, le dispositif gestionnaire de communications sécurisées étant configuré pour donner comme instruction aux premier et second dispositifs (MT2, PT1) de communications d'établir un canal direct de communications sécurisées entre le second dispositif (PT1) de communications et le premier dispositif (MT2) de communications, et
- dans le second mode, un premier canal de communications sécurisées étant établi entre le dispositif gestionnaire (MT1) de communications sécurisées et le second dispositif (PT1) de communications, et un second canal de communications sécurisées étant établi entre le dispositif gestionnaire (MT1) de communications sécurisées et le premier dispositif (MT2) de communications, et le dispositif gestionnaire (MT1) de communications sécurisées étant configuré pour permettre à des communications entre les premier et second dispositifs (MT2, PT1) de communications d'avoir lieu en utilisant les premier et second canaux de communications sécurisées.

2. Dispositif gestionnaire de communications sécurisées selon la revendication 1, dans le premier mode, le module d'établissement de canaux de communications sécurisées étant configuré pour provoquer la transmission au second dispositif (PT1) de communications de données d'identification uniques indicatives de l'identité d'un utilisateur, lesdites données d'identification uniques étant prévues pour permettre au second dispositif (PT1) de communications d'établir le canal de communications sécurisées avec le premier dispositif (MT2) de communications.

3. Dispositif gestionnaire de communications sécurisées selon la revendication 1 ou 2, et comportant :
un module de détection d'élément sécurisé configuré pour déterminer si le premier dispositif (MT2) de communications possède ou non un élément sécurisé, et
un module de sélection de mode de fonctionnement configuré pour sélectionner le premier mode de fonctionnement du module d'établissement de canaux de communications sécurisées lorsque le module de détection d'élément sécurisé détermine que le premier dispositif (MT2) de communications possède un élément sécurisé, et pour sélectionner le second mode de fonctionnement du module d'établissement de canaux de communications sécurisées lorsque le module de détection d'élément sécurisé détermine que le premier dispositif (MT2) de communications ne possède pas d'élément sécurisé.

4. Procédé de gestion de communications sécurisées entre des dispositifs dans un réseau, le procédé comportant les étapes consistant à :
déterminer, dans un dispositif gestionnaire (MT1) de communications sécurisées, si un premier dispositif (MT2) de communications est autorisé ou non à accéder à au moins un service fourni par un second dispositif (PT1) de communications ;
ledit dispositif gestionnaire (MT1) de communications sécurisées délivrant, audit second dispositif (PT1) de communications, des règles de politique de sécurité qui empêchent ou permettent l'accès à au moins un service fourni par le second dispositif (PT1) de communications à partir du premier dispositif (MT2) de communications, en fonction de la détermination effectuée à l'étape de détermination d'autorisation ; et
établir un canal de communications sécurisées entre ledit second dispositif (PT1) de communications et ledit premier dispositif (MT2) de communications en utilisant des données fournies par un élément sécurisé associé audit dispositif gestionnaire (MT1) de communications sécurisées, ladite étape d'établissement d'un canal de communications sécurisées comprenant :
- si le premier dispositif (MT2) de communications possède un élément sécurisé, l'instruction donnée par le dispositif gestionnaire de communications sécurisées, aux premier et second dispositifs (MT2, PT1) de communications, d'établir un canal direct de communications sécurisées entre le second dispositif (PT1) de communications et le premier dispositif (MT2) de communications, et
- si le premier dispositif (MT2) de communications ne possède pas d'élément sécurisé, l'établissement, par le dispositif gestionnaire (MT1) de communications sécurisées, d'un premier canal de communications sécurisées entre le dispositif gestionnaire (MT1) de communications sécurisées et le second dispositif (PT1) de communications, et d'un second canal de communications sécurisées entre le dispositif gestionnaire (MT1) de communications sécurisées et le premier dispositif (MT2) de communications, des communications sécurisées entre les premier (MT2) et second (PT1) dispositifs de communications étant ainsi permises par le dispositif gestionnaire (MT1) de communications sécurisées, en utilisant les premier et second canaux de communications sécurisées.

5. Procédé de gestion de communications sécurisées selon la revendication 4, l'étape d'établissement d'un canal de communications sécurisées comportant, si le premier dispositif (MT2) de communications possède un élément sécurisé, la transmission, par le dispositif gestionnaire (MT1) de communications sécurisées au second dispositif (PT1) de communications, de données d'identification uniques indicatives de l'identité d'un utilisateur, lesdites données d'identification uniques étant prévues pour permettre au second dispositif (PT1) de communications d'établir un canal de communications sécurisées avec le premier dispositif (MT2) de communications.

6. Procédé de gestion de communications sécurisées selon la revendication 5, comportant en outre une étape consistant à déterminer si le premier dispositif (MT2) de communications possède ou non un élément sécurisé.

7. Programme informatique comportant des instructions destinées à réaliser un procédé selon l'une quelconque des revendications 4 à 6 lorsque ledit programme est exécuté par un processeur.

8. Support d'enregistrement portant un programme informatique selon la revendication 7.

9. Système comportant un dispositif (PT1) de communications géré configuré pour être géré par un dispositif gestionnaire (MT1) de communications sécurisées, et le dispositif gestionnaire (MT1) de communications sécurisées, le dispositif gestionnaire (MT1) de communications sécurisées étant selon l'une quelconque des revendications 1 à 3, le dispositif de communications géré comportant :
un module de politique de sécurité servant à déterminer, en se référant à des règles de politique de sécurité, si le dispositif (PT1) de communications géré est autorisé ou non à communiquer avec d'autres dispositifs (MT2, LT2) de communications ;
un module récepteur configuré pour recevoir, en provenance dudit dispositif gestionnaire (MT1) associé de communications sécurisées, des règles de politique de sécurité indiquant si d'autres dispositifs (MT2, LT2) de communications sont autorisés ou non à accéder à au moins un service fourni par ledit dispositif de communications géré, le dispositif (PT1) de communications géré étant configuré pour ne permettre l'établissement de communications avec un autre dispositif (MT2) de communications que si le module récepteur a reçu, en provenance dudit dispositif gestionnaire (MT1) associé de communications sécurisées, des règles de politique de sécurité indicatives de l'autorisation dudit autre dispositif (MT2) de communications à accéder à au moins un service fourni par ledit dispositif (PT1) de communications géré ; et
un module de communications configuré pour communiquer avec un autre dispositif (MT2) de communications à l'aide d'un canal sécurisé établi en utilisant des données fournies par un élément sécurisé associé audit dispositif gestionnaire (MT1) de communications sécurisées.
